# EUROPÄISCHE PATENTSCHRIFT

(11) **EP 2 975 801 B1**
(45) Veröffentlichungstag und Bekanntmachung des Hinweises auf die Patenterteilung: **29.06.2016**
(21) Anmeldenummer: 14177647.6
(22) Anmeldetag: 18.07.2014
(51) Int. Cl.: H04L 12/24, H04L 29/06

(54) **Verfahren zum Erkennen eines Angriffs in einem Computernetzwerk**
Method for detecting an attack in a computer network
Procédé de détection d'une attaque sur un réseau informatique

(43) Veröffentlichungstag der Anmeldung: 20.01.2016
(73) Patentinhaber: Deutsche Telekom AG, 53113 Bonn (DE)
(72) Erfinder: Kloth, Mathias, 51429 Bergisch Gladbach (DE); Westphalen, Michael, 50999 Köln (DE)
(74) Vertreter: Patentship Patentanwaltsgesellschaft mbH

(56) Entgegenhaltungen:
- WO-A1-2013/016245
- US-A1- 2002 082 886
- US-A1- 2008 209 517

## Beschreibung

Die vorliegende Erfindung betrifft ein Verfahren und ein Analysesystem zum Erkennen eines Angriffs in einem Computernetzwerk.

Der Diebstahl von Unternehmensgeheimnissen geschieht oft unbemerkt durch Einschleusung von Schadprogrammen in das unternehmenseigene Computernetzwerk. Dabei kommen bei derartigen Angriffen teilweise selbstentwickelte und individuell für den konkreten Einsatz angepasste Schadprogramme zum Einsatz, die von den am Markt erhältlichen Antivirenprodukten nicht oder erst sehr spät erkannt werden. Als potentielles Opfer eines digitalen Spionageangriffs können Unternehmen sich zwar vorbereiten, jedoch sind die genauen Umstände wie z.B. Ort, Zeitpunkt und Ausgestaltung meist unbekannt. Zur Erkennung und Abwehr derartiger Angriffe kann ein angegriffenes Unternehmen unter Umständen vor der Herausforderung stehen, eine große Menge heterogener Protokolldaten von unterschiedlichen Sicherheits- und Betriebssystemen zu einem sinnvollen und erkenntnisbringenden Zusammenhang zu verknüpfen.

Die Druckschrift US 2002/082886 A1 beschreibt ein Verfahren und ein System zum Detektieren ungewöhnlicher Ereignisse und eine Anwendung dafür in der Computerangriffserkennung.

Die Druckschrift US 2008/209517 A1 beschreibt ein Verfahren und ein System zum Erzeugen, Verwalten und Anzeigen von Alarmen bei drahtlosen Netzwerküberwachungssystemen.

Die Druckschrift WO 2013/016245 A1 beschreibt Systeme und Verfahren zur Netzwerküberwachung und zum Testen mittels Anwendung intelligenter Sequenzen.

Es ist die Aufgabe der vorliegenden Erfindung, einen Angriff in einem Computernetzwerk zu erkennen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können auf der Aufzeichnung von Daten eines SIEM (Security Information and Event Management bzw. Sicherheitsinformations- und Ereignisverwaltung) Systems basieren. Ein SIEM System ist ein Begriff für Dienste von Software und Produkten, die Sicherheitsinformationsverwaltung ("security information management", SIM) mit Sicherheitsereignisverwaltung ("security event management", SEM) kombinieren. Die SIEM Technologie stellt eine Echtzeitanalyse von Sicherheitsalarmen zur Verfügung, die von Netzwerk-Hardware und Netzwerkanwendungen generiert werden können. SIEM kann in Form von Software, Anwendungen oder verwalteten Diensten vertrieben werden und auch dazu verwendet werden, um sicherheitsrelevante Daten aufzuzeichnen und Reporte für Compliance Anwendungen zu erzeugen.

Die im Folgenden vorgestellten Verfahren und Systeme können einen Indikator oder ein Alarmsignal für einen Angriff auf ein Computersystem mit einem C2 (Command&Control)-Server liefern. Command&Control Server sind zentralisierte Maschinen bzw. Computerserver, die in der Lage sind Befehle zu senden und Antworten von Maschinen bzw. Computern zu erhalten, die Teil eines Botnetzes sind. Angreifer, die einen DDoS (distributed denial of service) Angriff starten wollen, können jederzeit spezielle Befehle mit Instruktionen, einen bestimmten Zielrechner anzugreifen, an den C2 Server ihres Botnetzes senden, und jede infizierte Maschine, die mit dem kontaktierten C2 Server kommuniziert, wird dementsprechend einen koordinierten Angriff gegen den Zielrechner starten.

Die im Folgenden vorgestellten Verfahren und Systeme können eingesetzt werden, um ein Computernetzwerk vor Angriffen aus Botnetzen zu schützen, insbesondere vor DDoS-Angriffen, Spamming-Angriffen, Sniffing-Angriffen, Phishing-Angriffen, Verbreiten von Malware, Key-Logging, Installieren unerwünschter Software, Identitätsdiebstahl, Manipulation des Computernetzwerks.

Die im Folgenden vorgestellten Verfahren und Systeme können im Bereich der Informationstechnologie (IT) eingesetzt werden. Informationstechnologie ist ein Oberbegriff für die Informations- und Datenverarbeitung sowie für die dafür benötigte Hard- und Software. Die Informationstechnologie eines Unternehmens umfasst sämtliche technischen Einrichtungen zur Erzeugung, Verarbeitung und Weiterleitung von Informationen.

Um die Erfindung im Detail zu beschreiben, werden die folgenden Abkürzungen und Bezeichnungen verwendet:
- IT:: Informationstechnologie.
- SIEM:: Security Information and Event Management bzw. Sicherheitsinformations- und Ereignisverwaltung
- SIM:: Security Information Management, Sicherheitsinformationsverwaltung
- SEM:: Security Event Management, Sicherheitsereignisverwaltung
- C2 Server:: Command&Control Server bzw. Befehls- und Kontroll-Server

Gemäß einem Aspekt betrifft die Erfindung ein Verfahren zum Erkennen eines Angriffs in einem Computernetzwerk mit einer Mehrzahl von Computern, mit folgenden Schritten: Empfangen einer Mehrzahl von Warnmeldungen von den Computern, wobei die Warnmeldungen auf verschiedenen Typen von Anomalien des Computernetzwerks basieren; Vergleichen einer Anzahl der Warnmeldungen aus der Mehrzahl der empfangenen Warnmeldungen mit einem vorgegebenen Ereignisschwellwert, wobei die Anzahl der Warnmeldungen auf einem selben Typ einer Anomalie des Computernetzwerks basieren; und Ausgeben eines Alarmsignals, falls die Anzahl der Warnmeldungen, die auf demselben Typ einer Anomalie des Computernetzwerks basieren, den Ereignisschwellwert unterschreitet.

Der Vorteil eines solchen Verfahrens liegt darin, dass das Verfahren schnell und zuverlässig ein Alarmsignal bei einem bevorstehenden Angriff auf das Computernetzwerk auslösen kann. Die Computer des Computernetzwerks erzeugen stets eine Vielzahl von Warnmeldungen, beispielsweise bei nicht funktionierendem Software-Update, wenn der Prozessor überlastet ist, wenn ein Update der Software bisher nicht durchgeführt wurde, wenn ein Passwort falsch eingegeben wurde, wenn der Zugriff auf das Internet vorübergehend nicht möglich ist, wenn der Zugriff auf bestimmte Daten nicht möglich ist, etc. Diese Warnmeldungen sind bedingt durch bestimmte Anomalien des Computernetzwerks, die während des Betriebs häufiger oder weniger häufig vorkommen und zumeist eine Interaktion des Benutzers erfordern, um sie zu beheben. Dabei treten unkritische bzw. leichte Anomalien des Computersystems, wie beispielsweise nicht durchgeführter Software-Update oder Überlastung des Prozessors sehr häufig auf und sind leicht zu beheben. Kritische Anomalien, wie beispielsweise unerwarteter Ausfall bestimmter Komponenten des Systems oder Unzugänglichkeit selten genutzter Systemressourcen, treten dagegen nur sehr selten auf und so auch diesbezügliche Warnmeldungen.

Die Grundidee, auf der das Verfahren basiert, ist nun die Erkennung eines möglichen oder bevorstehenden Angriffs auf das Computernetzwerk bzw. Computersystem basierend auf solch kritischen Anomalien des Netzwerks. Hierzu können lediglich die Anzahl auftretender Warnmeldungen den möglichen Anomalien des Computernetzwerks zugeordnet und gezählt werden. Falls die Anzahl der Warnmeldungen, die auf demselben Typ einer Anomalie des Computernetzwerks basieren, einen Ereignisschwellwert unterschreitet, so kann durch die Auslösung eines Alarms der Nutzer des Computernetzwerks gewarnt werden, dass ein möglicher Angriff bevorsteht oder bereits stattgefunden hat.

Die Ausgabe eines Alarmsignals bei einem möglichen Angriff auf das Computernetzwerk kann damit flexibel, schnell und genau ausgeführt werden. Durch den modularen Aufbau des Verfahrens können die einzelnen Verfahrensschritte flexibel auf unterschiedlichen Software- oder Hardwarekomponenten realisiert werden, beispielsweise auf Komponenten innerhalb des Computernetzwerks oder auf externen Komponenten außerhalb des Computernetzwerks.

Gemäß einer Ausführungsform umfasst das Verfahren ein Empfangen der Mehrzahl von Warnmeldungen in einem vorgegebenen Zeitintervall.

Dies hat den Vorteil, dass Warnmeldungen, die auf verschiedenen Typen einer Anomalie des Computernetzwerks basieren, über den gleichen Zeitraum gemessen werden, so dass der Ereignisschwellwert sich für die verschiedenen Typen von Warnmeldungen stets auf den gleichen Zeitraum bezieht. Damit kann zuverlässig auf selten vorkommende Anomalien geschlossen werden, die einen möglichen oder bereits stattgefundenen Angriff auf das Computernetzwerk signalisieren. Das Verfahren arbeitet somit sehr präzise und zuverlässig.

Gemäß einer Ausführungsform umfasst das Verfahren ein Klassifizieren der Mehrzahl von Warnmeldungen bezüglich des Typs der von einer jeweiligen Warnmeldung angezeigten Anomalie.

Dies hat den Vorteil, dass aus der Vielzahl von eintreffenden Warnmeldungen schnell die relevanten Warnmeldungen ausgefiltert werden können, die eine kritische Anomalie des Computernetzwerks signalisieren.

Gemäß einer Ausführungsform umfasst das Verfahren ein Bestimmen des Typs der von einer Warnmeldung angezeigten Anomalie basierend auf einem Inhalt der Warnmeldung.

Dies hat den Vorteil, dass der Typ der Anomalie leicht bestimmt werden kann, beispielsweise durch Abfragen eines bestimmten Datenfelds oder Flags innerhalb der Warnmeldung, die beispielsweise als ein Datenpaket mit Header und Payload ausgeführt sein kann. Wenn die Anomalie basierend auf einem Inhalt der Warnmeldung bestimmt werden kann, so sind keine sonstigen Informationen zu dessen Bestimmung nötig, was das Verfahren einfach und zuverlässig macht.

Gemäß einer Ausführungsform umfasst das Verfahren ein Zählen der empfangenen Warnmeldungen, die bezüglich desselben Typs klassifiziert sind, in dem vorgegebenen Zeitintervall, um die Anzahl zu bestimmen; und ein Ausgeben des Alarmsignals falls die Anzahl der in dem vorgegebenen Zeitintervall gezählten Warnmeldungen, die bezüglich desselben Typs klassifiziert sind, den Ereignisschwellwert unterschreitet.

Dies hat den Vorteil, dass das Verfahren sehr einfach ausführbar ist, beispielsweise durch einen Schalter, eine Mehrzahl von Zählern und einen Timer bzw. eine Uhr. Der Schalter kann die Warnmeldungen basierend auf einem Typ der von ihnen signalisierten Anomalie einem jeweiligen der Zähler zuführen, der die Anzahl der ihm zugeführten Warnmeldungen zählt. Nach Ablauf einer bestimmten Zeit, angezeigt durch den Timer, können die Zählerwerte ausgelesen werden. Sobald einer der ausgelesenen Zählerwerte den Ereignisschwellwert unterschritten, kann Alarm ausgelöst werden. Damit ist das Verfahren mit einfachen Logik-Schaltungen realisierbar, beispielsweise auf einem IC oder einem Chip.

Gemäß einer Ausführungsform umfasst das Verfahren ein Bestimmen eines Wahrscheinlichkeitswerts für das Vorliegen eines Angriffs auf das Computernetzwerk basierend auf der Anzahl der Warnmeldungen, die den Ereignisschwellwert unterschreiten.

Dies hat den Vorteil, dass über den Wahrscheinlichkeitswert eine Wertung des Alarms möglich ist. Der Alarm kann bereits bei einer geringen Wahrscheinlichkeit eines Angriffs ausgelöst werden, der Wahrscheinlichkeitswert signalisiert dann eine Schwere des Angriffs. Beispielsweise kann ein geringer Wahrscheinlichkeitswert als ein grünes Alarmlicht angezeigt werden, ein mittelgroßer Wahrscheinlichkeitswert durch ein gelbes Alarmlicht und ein hoher Wahrscheinlichkeitswert durch ein rotes Alarmlicht. Der Nutzer erhält durch den Wahrscheinlichkeitswert mehr Informationen über die Art bzw. Schwere des möglichen oder bevorstehenden Angriffs.

Gemäß einer Ausführungsform umfasst das Verfahren ein Bestimmen des Wahrscheinlichkeitswerts für das Vorliegen eines Angriffs auf das Computernetzwerk ferner basierend auf zumindest einem der folgenden vorbestimmten Parameter: Schwarze Listen, Weiße Listen, Schwellenwerte, Ereigniszusammenhänge, und Definition von Gefährdungspotenzialen einzelner Nutzergruppen des Computernetzwerks.

Die hat den Vorteil, dass selten auftretende Ereignisse bzw. Anomalien des Computernetzwerks, die aber mit einem Normalzustand des Systems verbunden sein können, besser abgegrenzt werden können von selten auftretenden Ereignissen, die mit einer Gefährdung des Computernetzwerks verbunden sind. Anhand dieser Parameter kann die Wissensbasis des Nutzers des Computernetzwerks mit in die Erkennung eingebracht werden. So können Situationen aus der Vergangenheit (z.B. Schwellenwerte, Ereigniszusammenhänge) sowie aktuell vorliegende Gefahren (z.B. Blacklists, Whitelists, Gefährdungspotenziale einzelner Personengruppen) besonders berücksichtigt werden.

Gemäß einer Ausführungsform umfasst das Verfahren ein Bestimmen des Wahrscheinlichkeitswerts für das Vorliegen eines Angriffs auf das Computernetzwerk ferner basierend auf einer Anzahl von Besuchern des Computernetzwerks, insbesondere auf einer Anzahl von Besuchern einer Webseite des Computernetzwerks.

Dies hat den Vorteil, dass ein Angriff anhand der Anzahl von Besuchern zuverlässig erkannt werden kann. Wird eine Webseite von vielen unterschiedlichen Nutzern besucht, so kann dies den Normalzustand beschreiben. Bei Besuch der Webseite von nur wenigen Nutzern, kann ein Angriff auf die Webseite vorliegen. Hier können auch Daten der Nutzer mit in die Analyse einbezogen werden, beispielsweise deren IP-Adressen, Domain-Name Server, Zeit und Dauer des Zugriffs oder geographische Position, an der sie sich aufhalten. Beispielsweise kann es auffällig sein, wenn viele Nutzer aus verschiedenen geographischen Positionen auf eine Webseite zugreifen oder wenn während der Nacht ein vermehrtes Aufkommen an Zugriffen beobachtet werden kann. Bei Nutzung solcher Informationen lässt sich die Zuverlässigkeit der Erkennung eines Angriffs noch weiter erhöhen.

Gemäß einer Ausführungsform umfasst das Verfahren ein Bestimmen des Wahrscheinlichkeitswerts für das Vorliegen eines Angriffs auf das Computernetzwerk ferner basierend auf einer Häufigkeit von selten ausgeführten Prozessen in dem Computernetzwerk.

Ein Computernetzwerk, das sich im Normalzustand befindet, arbeitet meist mit den gleichen Prozessen. Selten ausgeführte Prozesse können daher auf einfache Weise einen Hinweis für eine Anomalie und damit eine mögliche Gefährdung liefern.

Gemäß einer Ausführungsform umfasst das Verfahren ein Bestimmen des Wahrscheinlichkeitswerts für das Vorliegen eines Angriffs auf das Computernetzwerk ferner basierend auf einer Häufigkeit von Programmen, die auf einer vorgegebenen Gruppe aus der Mehrzahl von Computern in dem Computernetzwerk ausgeführt werden, insbesondere basierend auf einer Häufigkeit von Programmen, die erst ab einer vorgegebenen Zeit auf der vorgegebenen Gruppe von Computern ausgeführt werden.

Dies hat den Vorteil, dass das Verfahren anhand einer solchen Auswertung mögliche Virenprogramme oder Schadsoftware, die auf einzelnen oder einer kleinen Gruppe von Computern ausgeführt wird, leicht und zuverlässig erkennen kann.

Gemäß einer Ausführungsform umfasst das Verfahren ein Nutzen eines oder mehrerer der folgenden Systeme auf zumindest einem der Mehrzahl von Computern zum Erzeugen der Warnmeldungen: Virenscanner, Proxyserver, IDS, Angrifferkennungssystem, Firewall, Betriebssystem, Log Management System, SIEM System, Security Information and Event Management System.

Der Vorteil eines solchen Verfahrens liegt darin, dass die angeführten Systeme dahingehend genutzt werden können, verschiedene Kenngrößen des Systems zu ermitteln und über die Warnmeldungen weiterzuleiten. Mittels der Analyse einer Vielzahl an Protokolldaten ist es dem Verfahren möglich eine Auffälligkeit bzw. Anomalie früher zu erkennen, als dies durch eine Betrachtung der aktuellen Netzwerkindikatoren möglich ist.

Zum Generieren der Warnmeldungen kann so auf bereits vorhandene Infrastruktur zurückgegriffen werden, beispielsweise bereits installierte Protokolldatensysteme, die eine Aufzeichnung relevanter Daten vornehmen. Die Analyse kann mit unterschiedlichen Analyseverfahren ausgeführt werden, beispielsweise mit Methoden der Künstlichen Intelligenz oder Neuronaler Netze und liefert zuverlässige Analyseergebnisse, die in Form von Ereignissen aufbereitet sein können. Die Analyse kann die Vielzahl an Daten, die in dem Computernetz vorliegen, auf die relevanten Aspekte begrenzen bzw. eine gewisse Anzahl relevanter Ereignisse liefern, die dann weiter eingegrenzt werden können.

Gemäß einer Ausführungsform umfasst das Verfahren ein Anpassen des Ereignisschwellwerts basierend auf der Anzahl der Warnmeldungen, die den Ereignisschwellwert unterschreiten.

Dies hat den Vorteil, dass in den Ereignisschwellwert Kenntnisse über das Computernetzwerk einfließen können, beispielsweise über die Struktur und die einzelnen Komponenten des Netzwerks. Der Indikator kann damit flexibel an sich ändernde Umgebungseinflüsse, beispielsweise zusätzliche Software- oder Hardwarekomponenten im Computernetzwerk, angepasst werden.

Gemäß einer Ausführungsform umfasst das Verfahren ein adaptives Anpassen des Ereignisschwellwerts in Abhängigkeit von zumindest einem der folgenden Ereignisse: Anwender-Feedbacks, Veränderungen in der Netzwerk-Architektur des Computernetzwerks, Änderungen in der Anzahl der Computer des Computernetzwerks.

Ein solches Verfahren hat den Vorteil, dass es sich flexibel an eine geänderte Struktur anpassen kann und dass das Wissen des Anwenders in die Entscheidungsfindung mit einfließen kann.

Gemäß einem Aspekt betrifft die Erfindung ein Analysesystem zum Erkennen eines Angriffs in einem Computernetzwerk mit einer Mehrzahl von Computern, mit: einem Empfangsmodul, das ausgelegt ist, eine Mehrzahl von Warnmeldungen von den Computern zu empfangen, wobei die Warnmeldungen auf verschiedenen Typen von Anomalien des Computernetzwerks basieren; einem Vergleichsmodul, das ausgelegt ist, eine Anzahl der Warnmeldungen aus der Mehrzahl der empfangenen Warnmeldungen mit einem vorgegebenen Ereignisschwellwert zu vergleichen, wobei die Anzahl der Warnmeldungen auf einem selben Typ einer Anomalie des Computernetzwerks basieren; und einem Ausgabemodul, das ausgelegt ist, ein Alarmsignal auszugeben, falls die Anzahl der Warnmeldungen, die auf demselben Typ einer Anomalie des Computernetzwerks basieren, den Ereignisschwellwert unterschreitet.

Der Vorteil eines solchen Analysesystems liegt darin, dass das System schnell und zuverlässig ein Alarmsignal bei einem bevorstehenden Angriff auf das Computernetzwerk auslösen kann. Das Analysesystem kann einen möglichen oder bevorstehenden Angriff auf das Computernetzwerk bzw. Computersystem zuverlässig basierend auf über die Warnmeldungen indizierte kritische Anomalien des Netzwerks erkennen. So müssen lediglich die Anzahl auftretender Warnmeldungen den möglichen Anomalien des Computernetzwerks zugeordnet und gezählt werden. Ist die Anzahl einer bestimmten Anomalie groß, d.h. überschreitet sie einen bestimmten Ereignisschwellwert, so ist von einer häufig auftretenden und daher als unkritischen zu klassifizierenden Anomalie des Computernetzwerks auszugehen. Ist die Anzahl einer bestimmten Anomalie dagegen klein, d.h. unterschreitet sie den Ereignisschwellwert, so ist von einer selten auftretenden und daher als kritisch zu klassifizierenden Anomalie des Computernetzwerks auszugehen. Bei Unterschreiten des Ereignisschwellwerts kann das Ausgabemodul ein Alarmsignal ausgeben, um den Nutzer des Computernetzwerks zu warnen, dass ein möglicher Angriff bevorsteht oder bereits stattgefunden hat.

Die Ausgabe eines Alarmsignals bei einem möglichen Angriff auf das Computernetzwerk kann damit flexibel, schnell und genau ausgeführt werden. Durch den modularen Aufbau des Analysesystems können die einzelnen Module flexibel auf unterschiedlichen Software- oder Hardwarekomponenten realisiert werden, beispielsweise auf Komponenten innerhalb des Computernetzwerks oder auf externen Komponenten außerhalb des Computernetzwerks.

Gemäß einer Ausführungsform umfasst das Analysesystem ein Klassifizierungsmodul, das ausgelegt ist, die Mehrzahl von Warnmeldungen bezüglich des Typs der von einer jeweiligen Warnmeldung angezeigten Anomalie zu klassifizieren.

Der Vorteil des Klassifizierungsmoduls liegt darin, dass es aus der Vielzahl von eintreffenden Warnmeldungen schnell die relevanten Warnmeldungen ausfiltern kann, die eine kritische Anomalie des Computernetzwerks signalisieren.

Gemäß einer Ausführungsform umfasst das Analysesystem ein Anpassungsmodul, das ausgelegt ist, den Ereignisschwellwert basierend auf der Anzahl der Warnmeldungen, die den Ereignisschwellwert unterschreiten, anzupassen.

Dies hat den Vorteil, dass das Anpassungsmodul den Ereignisschwellwert basierend auf Kenntnissen über das Computernetzwerk anpassen kann, beispielsweise in adaptiver Weise. Die Anpassung kann beispielsweise abhängig von der Struktur und den einzelnen Komponenten des Netzwerks erfolgen. Die Auslösung des Alarmsignals kann damit flexibel an sich ändernde Umgebungseinflüsse, beispielsweise zusätzliche Software- oder Hardwarekomponenten im Computernetzwerk, angepasst werden.

Weitere Ausführungsbeispiele werden Bezug nehmend auf die beiliegenden Zeichnungen erläutert. Es zeigen:
Fig. 1 eine schematische Darstellung einer Klassifikation 100 von Warnmeldungen in verschiedene Typen von Anomalien gemäß einer Ausführungsform;
Fig. 2 eine schematische Darstellung eines Analysesystems 200 zum Erkennen eines Angriffs auf ein Computernetzwerk gemäß einer Ausführungsform;
Fig. 3 eine schematische Darstellung eines Analysesystems 300 zum Erkennen eines Angriffs auf ein Computernetzwerk gemäß einer weiteren Ausführungsform;
Fig. 4 eine schematische Darstellung eines Szenarios 400 eines Angriffs auf eine Internet-Webseite 411 eines Computernetzwerks 410, wobei ein Analysesystem 200, 300 gemäß einer Ausführungsform den Angriff erkennt;
Fig. 5 eine schematische Darstellung eines Szenarios 500 eines Virenangriffs auf eine Gruppe von vernetzten Computern eines unternehmensinternen Computernetzwerks 510, wobei ein Analysesystem 200, 300 gemäß einer Ausführungsform den Angriff erkennt; und
Fig. 6 eine schematische Darstellung eines Verfahrens 600 zum Erkennen eines Angriffs auf ein Computernetzwerk gemäß einer Ausführungsform.

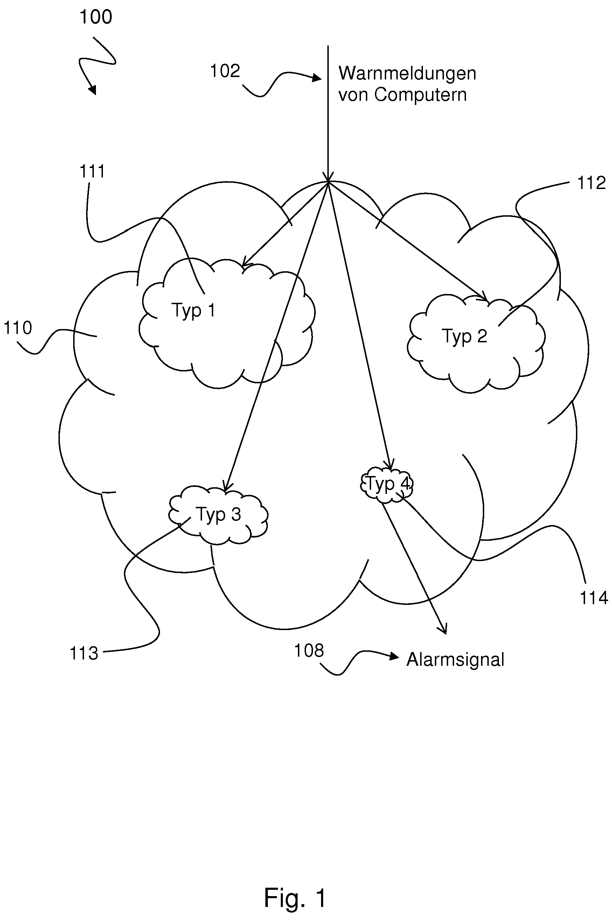

Fig. 1 zeigt eine schematische Darstellung einer Klassifikation 100 von Warnmeldungen in verschiedene Typen von Anomalien gemäß einer Ausführungsform. Zur Klassifikation werden Warnmeldungen 102 von Computern empfangen, die unterschiedliche Typen oder Arten von Warnungen transportieren. Die gesamte Menge 110 bzw. der gesamte Teil oder die gesamte Anzahl der Warnmeldungen enthält verschieden geartete Warnungen, die auf verschiedenen Anomalien eines Computernetzwerks basieren. Eine Anomalie des Computernetzwerks bedeutet dabei eine Unregelmäßigkeit oder eine Auffälligkeit des Computernetzwerks bzw. ein von der Norm abweichendes Muster z.B. infolge einer Störung. Eine Anomalie kann somit als ein Zustand des Computernetzwerks angesehen werden, der vom Erwarteten abweicht.

In Fig. 1 ist die Klassifikation der Warnmeldungen in einen ersten Typ 111 einer Anomalie, einen zweiten Typ 112 einer Anomalie, einen dritten Typ 113 einer Anomalie und einen vierten Typ 114 einer Anomalie dargestellt. Allerdings kann jede andere Anzahl von Typen auftreten. In Fig. 1 treten Warnmeldungen des ersten Typs 111 einer Anomalie am häufigsten auf, danach Warnmeldungen des zweiten Typs 112 einer Anomalie, danach Warnmeldungen des dritten Typs 113 einer Anomalie und am seltensten treten Warnmeldungen des vierten Typs 114 einer Anomalie auf.

Anhand der Anzahl der Warnmeldungen des jeweiligen Typs kann darauf geschlossen werden, ob sich das Computersystem in einem kritischen Zustand befindet, d.h. ob ein Angriff auf das Computersystem bevorsteht oder bereits stattgefunden hat. Unterschreitet die Anzahl der Warnmeldungen eines Typs von Anomalie, hier des vierten Typs 114, bezogen auf einen bestimmten Zeitraum eine bestimmte Schwelle, auch Ereignisschwellwert genannt, so liegt ein kritischer Zustand vor und ein Alarmsignal 108 wird ausgelöst.

Die im Folgenden beschriebenen Verfahren und Analysesysteme können auf einer in Fig. 1 beschriebenen Klassifikation basieren.

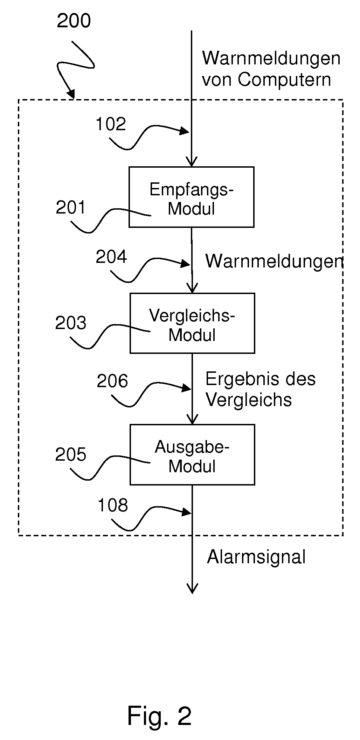

Fig. 2 zeigt eine schematische Darstellung eines Analysesystems 200 zum Erkennen eines Angriffs in einem Computernetzwerk mit einer Mehrzahl von Computern gemäß einer Ausführungsform. Das Analysesystem 100 umfasst ein Empfangsmodul 201, ein Vergleichsmodul 203 und ein Ausgabemodul 205.

Mit dem Empfangsmodul 201 werden eine Mehrzahl von Warnmeldungen 102 von den Computern empfangen, wobei die Warnmeldungen auf verschiedenen Typen von Anomalien des Computernetzwerks entsprechend der Darstellung in Fig. 1 basieren.

Mit dem Vergleichsmodul 203 wird eine Anzahl bzw. ein Teil der Warnmeldungen 204 aus der Mehrzahl der empfangenen Warnmeldungen mit einem vorgegebenen Ereignisschwellwert verglichen, wobei die Anzahl bzw. der Teil der Warnmeldungen 204 auf einem selben Typ einer Anomalie des Computernetzwerks basieren, beispielsweise des vierten Typs 114, wie in Fig. 1 dargestellt.

Mit dem Ausgabemodul 205 wird ein Alarmsignal 108 ausgegeben, falls die Anzahl der Warnmeldungen, die auf demselben Typ einer Anomalie des Computernetzwerks basieren, d.h. ein Ergebnis 206 des Vergleichsmoduls 203, den Ereignisschwellwert unterschreitet.

Im Folgenden wird das modular aufgebaute Analysesystem 200 näher beschrieben. Das Analysesystem 200 kann eine große Menge empfangener Warnmeldungen automatisiert korrelieren und auf das Vorliegen einer Anomalie und damit eines möglichen Indikators für einen Angriff analysieren. Als Datenquelle können z.B. gezielt ausgewählte Logdaten oder alternativ ein bereits installiertes SIEM (Security Information and Event Management)-System, genutzt werden. Der Zweck der Analyse ist es, die Menge der vorhandenen Daten durch bestimmte Analyseverfahren soweit zu reduzieren und in Form von Ereignissen bzw. "Events" aufzubereiten, dass eine Fachkraft in die Lage versetzt wird, potentielle Angriffe auf Basis der analysierten Logdaten zu erkennen. Das zugrunde liegende automatisierte Analyseverfahren basiert auf der Suche nach unbekannten und selten vorkommenden Ereignissen. Dabei steht die Häufigkeit des Auftretens eines bestimmten (oder vergleichbaren) Ereignisses in einem bestimmten Zeitraum, in direktem Zusammenhang zum "Bekanntheitsgrad". Häufig auftretende Ereignisse werden dabei in ihrer Tendenz eher als bekannt klassifiziert und sind damit eher irrelevant. Selten vorkommende Ereignisse hingegen sind in ihrer Tendenz eher unbekannt und damit potentiell relevanter.

Auf dieser Basis werden zusammen mit weiteren individuell festzulegenden Parametern wie z.B. Schwarzen Listen ("Blacklists"), Weißen Listen ("Whitelists"), Schwellenwerten, Ereigniszusammenhängen, sowie der Definition von Gefährdungspotentialen einzelner Personengruppen ein Wahrscheinlichkeitswert für das Vorliegen .eines Angriffs errechnet und bei Überschreiten eines bestimmten Schwellwertes zu einem Event korreliert und für weitere Analysen aufbereitet. Im Kern handelt es sich also um eine Häufigkeitsanalyse von Ereignissen bezogen auf einen bestimmten Zeitraum. Die Parameteranpassungen, die letztlich mitentscheidend für eine positive Anomalieerkennung sind, können durch das Analysesystem 200 teilautomatisiert ausgeführt werden. Dazu können Methoden aus dem Bereich der "Künstlichen Intelligenz" angewandt werden, wobei das Analysesystem 200 dem Anwender/Analysten konkrete Vorschläge, z.B. für die Anpassung eines bestimmten Schwellenwertes machen kann. Die Vorschläge können dabei unter anderem auf Basis von Anwender-Feedbacks und sich verändernden Rahmenbedingungen unterbreitet werden, wie z.B. festgestellten Veränderungen in der Netzwerk-Architektur oder vorhersehbaren Veränderungen in der Anzahl aktiver Netzwerkteilnehmer, beispielsweise zur Urlaubszeit. Dabei kann eine durch den Anwender oder Analysten getroffene Entscheidung über einen erteilten Vorschlag wiederum Einfluss auf zukünftige Vorschläge haben.

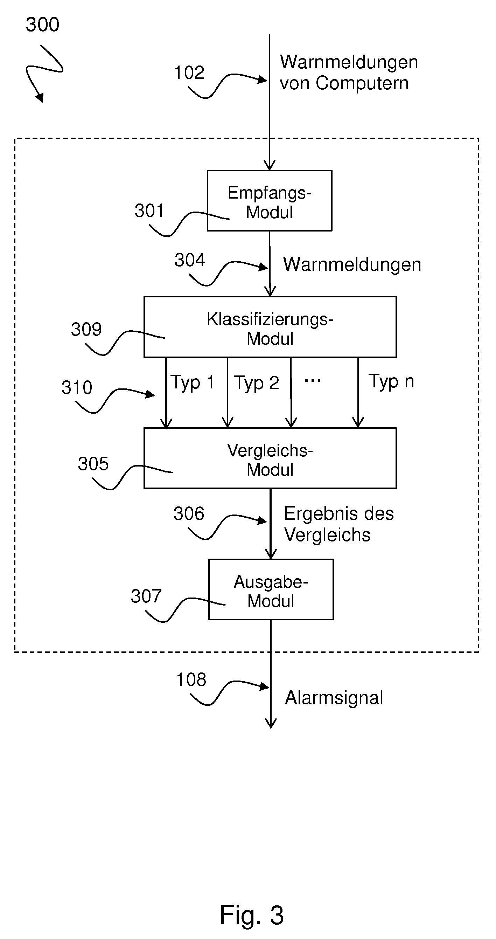

Fig. 3 zeigt eine schematische Darstellung eines Analysesystems 300 zum Erkennen eines Angriffs in einem Computernetzwerk mit einer Mehrzahl von Computern gemäß einer weiteren Ausführungsform. Das Analysesystem 300 umfasst ein Empfangsmodul 301, ein Klassifikationsmodul 309, ein Vergleichsmodul 305 und ein Ausgabemodul 307.

Mit dem Empfangsmodul 301 werden eine Mehrzahl von Warnmeldungen 102 von den Computern empfangen, wobei die Warnmeldungen auf verschiedenen Typen von Anomalien des Computernetzwerks entsprechend der Darstellung in Fig. 1 basieren.

Dabei können die Mehrzahl von Warnmeldungen in einem vorgegebenen Zeitintervall, beispielsweise von 1 Sekunde, 1 Minute, 5 Minuten, 30 Minuten oder 1 Stunde empfangen werden.

Zum Erzeugen der Warnmeldungen können beispielsweise eines oder mehrere der folgenden Systeme verwendet werden, die beispielsweise auf einem oder mehreren der Computer des Computernetzwerks installiert sein können: ein Virenscanner, ein Proxyserver, ein IDS (Angrifferkennungssystem), ein Firewall, ein Betriebssystem, ein Log Management System, ein SIEM System (Security Information and Event Management System).

Mit dem Klassifikationsmodul 309 wird die Mehrzahl von Warnmeldungen bezüglich des Typs 310 der von einer jeweiligen Warnmeldung angezeigten Anomalie klassifiziert. Die Warnmeldungen 304 werden in verschiedene Klassen eingeteilt, die mit einem Typ 310 von Anomalie des Computernetzwerks assoziiert sind, und an das Vergleichsmodul 305 weitergeleitet.

Die Mehrzahl von Warnmeldungen können somit bezüglich des Typs der von einer jeweiligen Warnmeldung angezeigten Anomalie klassifiziert werden. Der Typ der von einer Warnmeldung angezeigten Anomalie kann beispielsweise basierend auf einem Inhalt der Warnmeldung bestimmt werden, z.B. durch Auswertung eines Datenfeldes wie eines Headers oder einer Payload in der Warnmeldung.

Mit dem Vergleichsmodul 305 wird eine Anzahl bzw. ein Teil der Warnmeldungen aus der Mehrzahl der empfangenen Warnmeldungen mit einem vorgegebenen Ereignisschwellwert verglichen, wobei die Anzahl bzw. der Teil der Warnmeldungen auf einem selben Typ einer Anomalie des Computernetzwerks basieren, beispielsweise des vierten Typs 114, wie in Fig. 1 dargestellt. Die jeweiligen Anzahlen bzw. Teile der Warnmeldungen entsprechen in Fig. 3 den Klassen, in welche die Warnmeldungen durch das Klassifikationsmodul 309 klassifiziert wurden. Das Vergleichsmodul kann den Vergleich beispielsweise in einem vorgegebenen Zeitintervall durchführen, um eine Referenz zu haben.

Das Vergleichen kann beispielsweise durch Zählen der empfangenen Warnmeldungen, die bezüglich desselben Typs klassifiziert sind erfolgen, z.B. durch Zählen innerhalb eines vorgegebenen Zeitintervalls. Bei Unterschreiten des Ereignisschwellwerts der so gezählten Warnmeldungen innerhalb des vorgegebenen Zeitintervalls kann das Ausgabemodul 307 angewiesen werden, das Alarmsignal 108 auszugeben, z.B. über das Ergebnis 306 des Vergleichs.

Mit dem Ausgabemodul 307 wird das Alarmsignal 108 ausgegeben, falls die Anzahl der Warnmeldungen, die auf demselben Typ 310 einer Anomalie des Computernetzwerks basieren, d.h. die Anzahl der Warnmeldungen, die einer bestimmten Klasse zugeordnet wurden, den Ereignisschwellwert unterschreitet.

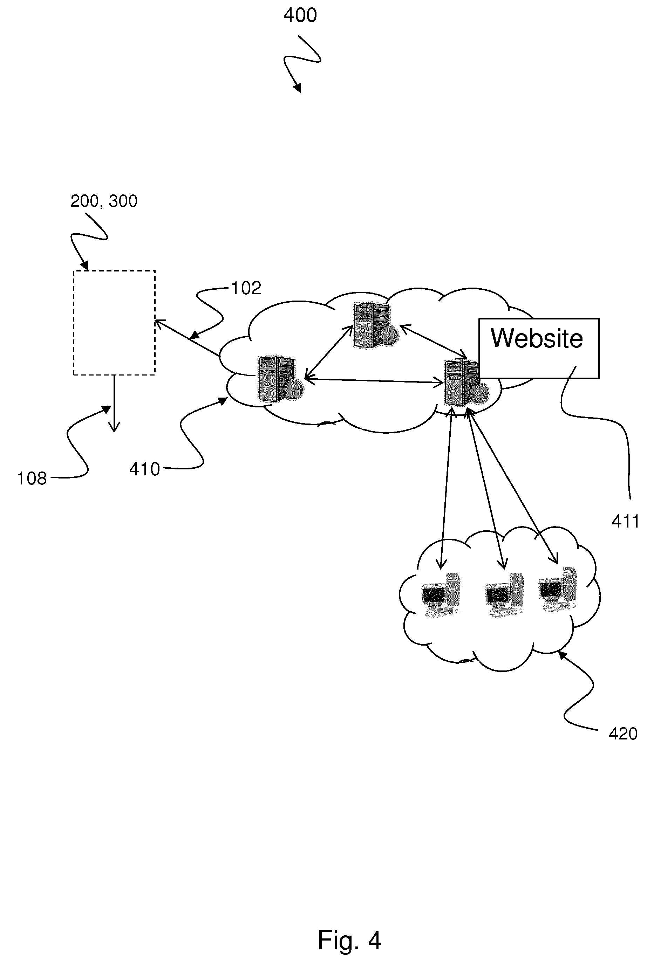

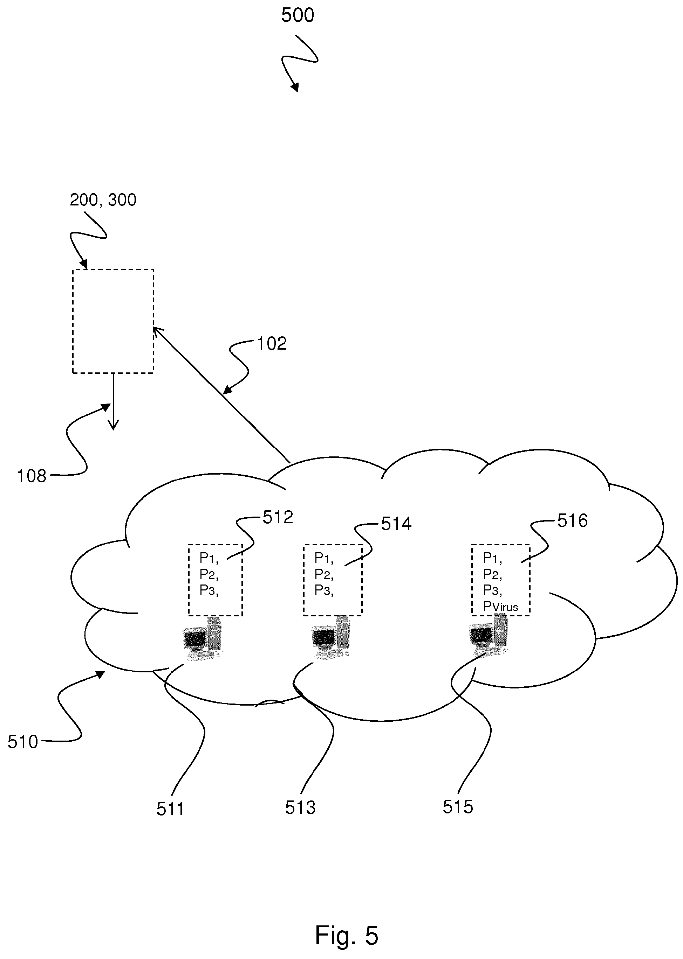

Das Ausgabemodul 307 kann zusätzlich zur Ausgabe des Alarmsignals einen Wahrscheinlichkeitswert für das Vorliegen eines Angriffs auf das Computernetzwerk bestimmen, beispielsweise basierend auf einer Analyse der Anzahl bzw. des Teils der Warnmeldungen, die den Ereignisschwellwert unterschreiten. Der Wahrscheinlichkeitswert kann ferner basierend auf einem oder mehreren der folgenden vorbestimmten Parameter bestimmt werden: Schwarze Listen, Weiße Listen, Schwellenwerte, Ereigniszusammenhänge, und Definition von Gefährdungspotenzialen einzelner Nutzergruppen des Computernetzwerks. Der Wahrscheinlichkeitswert für das Vorliegen eines Angriffs auf das Computernetzwerk kann ferner basierend auf einer Anzahl von Besuchern des Computernetzwerks bestimmt werden, insbesondere auf einer Anzahl von Besuchern einer Webseite des Computernetzwerks, wie im Folgenden zu Fig. 4 näher beschrieben. Der Wahrscheinlichkeitswert für das Vorliegen eines Angriffs auf das Computernetzwerk kann ferner basierend auf einer Häufigkeit von selten ausgeführten Prozessen in dem Computernetzwerk bestimmt werden, wie im Folgenden zu Fig. 5 näher beschrieben. Der Wahrscheinlichkeitswert für das Vorliegen eines Angriffs auf das Computernetzwerk kann ferner basierend auf einer Häufigkeit von Programmen, die auf einer vorgegebenen Gruppe aus der Mehrzahl von Computern in dem Computernetzwerk ausgeführt werden bestimmt werden, insbesondere basierend auf einer Häufigkeit von Programmen, die erst ab einer vorgegebenen Zeit auf der vorgegebenen Gruppe von Computern ausgeführt werden, wie im Folgenden zu Fig. 5 näher beschrieben.

Das Analysesystem 300 kann ferner ein (in Fig. 3 nicht dargestelltes) Anpassungsmodul umfassen, mit dem der Ereignisschwellwert basierend auf dem Teil der Warnmeldungen, dessen Anzahl den Ereignisschwellwert unterschreitet, angepasst werden kann. Dazu kann beispielsweise ein Vorschlag zum Anpassen des Ereignisschwellwerts unterbreitet werden, der auf der Anzahl der Warnmeldungen basieren kann, die den Ereignisschwellwert unterschreiten. Der Vorschlag kann ferner auf Anwender-Feedbacks basieren und/oder Veränderungen in der Netzwerk-Architektur des Computernetzwerks, insbesondere Änderungen in der Anzahl der Computer des Computernetzwerks. Das Anpassen des Ereignisschwellwerts kann adaptiv erfolgen, beispielsweise in Abhängigkeit von zumindest einem der folgenden Ereignisse: Anwender-Feedbacks, Veränderungen in der Netzwerk-Architektur des Computernetzwerks, Änderungen in der Anzahl der Computer des Computernetzwerks.

Fig. 4 zeigt eine schematische Darstellung eines Szenarios 400 eines Angriffs auf eine Internet-Webseite 411 eines Computernetzwerks 410, wobei ein Analysesystem 200, 300 den Angriff erkennt. Der Angriff geht von einer kleinen Gruppe von Besuchern 420 der Internet-Webseite 411 aus. Das Analysesystem 200, 300 kann den in Fig. 2 oder Fig. 3 beschriebenen Systemen entsprechen.

Das Analysesystem 200 kann ein Empfangsmodul 201, ein Vergleichsmodul 203 und ein Ausgabemodul 205 umfassen. Mit dem Empfangsmodul 201 werden eine Mehrzahl von Warnmeldungen 102 von den Computern empfangen, wobei die Warnmeldungen auf verschiedenen Typen von Anomalien des Computernetzwerks entsprechend der Darstellung in Fig. 1 basieren. Mit dem Vergleichsmodul 203 wird eine Anzahl bzw. ein Teil der Warnmeldungen aus der Mehrzahl der empfangenen Warnmeldungen mit einem vorgegebenen Ereignisschwellwert verglichen, wobei die Anzahl bzw. der Teil der Warnmeldungen auf einem selben Typ einer Anomalie des Computernetzwerks basieren. Mit dem Ausgabemodul 205 wird ein Alarmsignal 108 ausgegeben, falls die Anzahl der Warnmeldungen, die auf demselben Typ einer Anomalie des Computernetzwerks basieren, den Ereignisschwellwert unterschreitet.

Im Folgenden wird ein Betriebsmodus des Analysesystems 200, 300 beschrieben. Wenn viele verschiedene Benutzer ein bestimmtes System im Internet, z.B. eine Website 411 besuchen, dann ist dieser Vorgang mutmaßlich unkritisch, Wird das System jedoch nur von einer kleinen Benutzergruppe 420 angesprochen, dann könnte es sich hierbei ggf. um einen C2-Server handeln. Handelt es sich bei den betroffenen Nutzern zusätzlich um eine bestimmte Personengruppe mit erhöhtem Gefährdungspotential, generiert das Analysesystem 200, 300 ein Event bzw. ein Alarmsignal 108, welches dann von einer Fachkraft evaluiert werden kann.

Fig. 5 zeigt eine schematische Darstellung eines Szenarios 500 eines Virenangriffs auf eine Gruppe von vernetzten Computern eines unternehmensinternen Computernetzwerks 510, wobei ein Analysesystem 200, 300 den Angriff erkennt. Das Analysesystem 200, 300 kann den in Fig. 2 oder Fig. 3 beschriebenen Systemen entsprechen.

Das Analysesystem 200 kann ein Empfangsmodul 201, ein Vergleichsmodul 203 und ein Ausgabemodul 205 umfassen. Mit dem Empfangsmodul 201 werden eine Mehrzahl von Warnmeldungen 102 von den Computern empfangen, wobei die Warnmeldungen auf verschiedenen Typen von Anomalien des Computernetzwerks entsprechend der Darstellung in Fig. 1 basieren. Mit dem Vergleichsmodul 203 wird eine Anzahl bzw. ein Teil der Warnmeldungen aus der Mehrzahl der empfangenen Warnmeldungen mit einem vorgegebenen Ereignisschwellwert verglichen, wobei die Anzahl bzw. der Teil der Warnmeldungen auf einem selben Typ einer Anomalie des Computernetzwerks basieren. Mit dem Ausgabemodul 205 wird ein Alarmsignal 108 ausgegeben, falls die Anzahl der Warnmeldungen, die auf demselben Typ einer Anomalie des Computernetzwerks basieren, den Ereignisschwellwert unterschreitet.

Im Folgenden wird ein Betriebsmodus des Analysesystems 200, 300 beschrieben. Unter der Annahme, dass die meisten Office-PCs 511, 513, 515 in einem größeren Unternehmen vergleichbar konfiguriert sind und zum Großteil identische Softwareanwendungen P₁, P₂, P₃ genutzt werden, können durch den Vergleich einer hohen Anzahl von Prozesslisten 512, 514, 516 selten ausgeführte Programme P_{Virus} identifiziert werden. Ein Programm P_{Virus}, das beispielsweise nur auf einer kleinen Gruppe von Computern 515 ausgeführt wird und das auch erst seit einer kurzen Zeit, kann ein Hinweis auf eine kürzlich installierte Schadsoftware P_{Virus} sein. Das Analysesystem 200, 300 braucht also nicht nach bestimmten Prozessen zu suchen, sondern es kann durch Eliminierung der bekannten bzw. häufig vorkommenden Prozesse P₁, P₂, P₃ unbekannte Prozesse P_{Virus} identifizieren. Nach Auswertung der weiteren Parameter kann dieses Ereignis zu einem korrelierten Event bzw. einem Alarmsignal 108 zusammengefasst und einem Anwender oder Analysten zur weiteren Untersuchung vorgelegt werden.

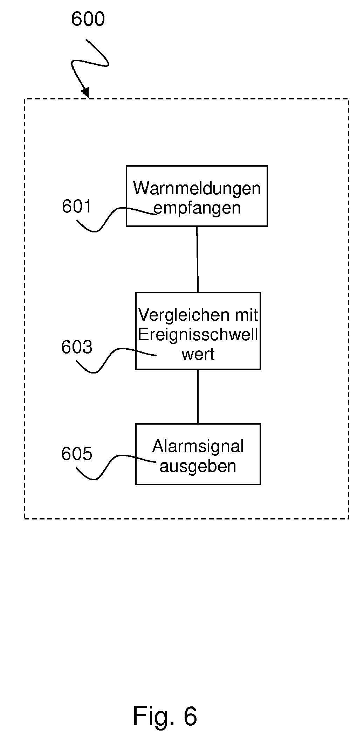

Fig. 6 zeigt eine schematische Darstellung eines Verfahrens 600 zum Erkennen eines Angriffs auf ein Computernetzwerk gemäß einer Ausführungsform. Das Verfahren 600 umfasst ein Empfangen 601 einer Mehrzahl von Warnmeldungen von den Computern, wobei die Warnmeldungen auf verschiedenen Typen von Anomalien des Computernetzwerks basieren. Das Verfahren 600 umfasst ein Vergleichen 603 einer Anzahl bzw. eines Teils der Warnmeldungen aus der Mehrzahl der empfangenen Warnmeldungen mit einem vorgegebenen Ereignisschwellwert, wobei die Anzahl bzw. der Teil der Warnmeldungen auf einem selben Typ einer Anomalie des Computernetzwerks basieren. Das Verfahren 600 umfasst ein Ausgeben 605 eines Alarmsignals, falls die Anzahl der Warnmeldungen, die auf demselben Typ einer Anomalie des Computernetzwerks basieren, den Ereignisschwellwert unterschreitet.

In einer Ausführungsform kann das Verfahren 600 ein Empfangen der Mehrzahl von Warnmeldungen in einem vorgegebenen Zeitintervall umfassen. In einer Ausführungsform kann das Verfahren 600 ein Klassifizieren der Mehrzahl von Warnmeldungen bezüglich des Typs der von einer jeweiligen Warnmeldung angezeigten Anomalie umfassen. In einer Ausführungsform kann das Verfahren 600 ein Bestimmen des Typs der von einer Warnmeldung angezeigten Anomalie basierend auf einem Inhalt der Warnmeldung umfassen. In einer Ausführungsform kann das Verfahren 600 ein Zählen der empfangenen Warnmeldungen, die bezüglich desselben Typs klassifiziert sind, in dem vorgegebenen Zeitintervall; und ein Ausgeben des Alarmsignals falls die Anzahl der in dem vorgegebenen Zeitintervall gezählten Warnmeldungen den Ereignisschwellwert unterschreitet umfassen. In einer Ausführungsform kann das Verfahren 600 ein Bestimmen eines Wahrscheinlichkeitswerts für das Vorliegen eines Angriffs auf das Computernetzwerk basierend auf der Anzahl der Warnmeldungen, die den Ereignisschwellwert unterschreiten umfassen.

In einer Ausführungsform kann das Verfahren 600 ein Bestimmen des Wahrscheinlichkeitswerts für das Vorliegen eines Angriffs auf das Computernetzwerk ferner basierend auf zumindest einem der folgenden vorbestimmten Parameter: Schwarze Listen, Weiße Listen, Schwellenwerte, Ereigniszusammenhänge, und Definition von Gefährdungspotenzialen einzelner Nutzergruppen des Computernetzwerks umfassen. In einer Ausführungsform kann das Verfahren 600 ein Bestimmen des Wahrscheinlichkeitswerts für das Vorliegen eines Angriffs auf das Computernetzwerk ferner basierend auf einer Anzahl von Besuchern des Computernetzwerks, insbesondere auf einer Anzahl von Besuchern einer Webseite des Computernetzwerks umfassen. In einer Ausführungsform kann das Verfahren 600 ein Bestimmen des Wahrscheinlichkeitswerts für das Vorliegen eines Angriffs auf das Computernetzwerk ferner basierend auf einer Häufigkeit von selten ausgeführten Prozessen in dem Computernetzwerk umfassen.

In einer Ausführungsform kann das Verfahren 600 ein Bestimmen des Wahrscheinlichkeitswerts für das Vorliegen eines Angriffs auf das Computernetzwerk ferner basierend auf einer Häufigkeit von Programmen, die auf einer vorgegebenen Gruppe aus der Mehrzahl von Computern in dem Computernetzwerk ausgeführt werden umfassen, insbesondere basierend auf einer Häufigkeit von Programmen, die erst ab einer vorgegebenen Zeit auf der vorgegebenen Gruppe von Computern ausgeführt werden.

In einer Ausführungsform kann das Verfahren 600 ein Nutzen eines oder mehrerer der folgenden Systeme auf zumindest einem der Mehrzahl von Computern zum Erzeugen der Warnmeldungen umfassen: Virenscanner, Proxyserver, IDS, Angrifferkennungssystem, Firewall, Betriebssystem, Log Management System, SIEM System, Security Information and Event Management System. In einer Ausführungsform kann das Verfahren 600 ein Anpassen des Ereignisschwellwerts basierend auf der Anzahl der Warnmeldungen, die den Ereignisschwellwert unterschreiten umfassen. In einer Ausführungsform kann das Verfahren 600 ein Unterbreiten eines Vorschlags zum Anpassen des Ereignisschwellwerts basierend auf der Anzahl der Warnmeldungen, die den Ereignisschwellwert unterschreitet und ferner basierend auf Anwender-Feedbacks und/oder Veränderungen in der Netzwerk-Architektur des Computernetzwerks, insbesondere Änderungen in der Anzahl der Computer des Computernetzwerks umfassen. In einer Ausführungsform kann das Verfahren 600 ein adaptives Anpassen des Ereignisschwellwerts umfassen, beispielsweise in Abhängigkeit von zumindest einem der folgenden Ereignisse: Anwender-Feedbacks, Veränderungen in der Netzwerk-Architektur des Computernetzwerks, Änderungen in der Anzahl der Computer des Computernetzwerks.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 6 beschriebene Verfahren 600 ausgeführt werden kann, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, eine Mehrzahl von Warnmeldungen von den Computern zu empfangen 601, wobei die Warnmeldungen auf verschiedenen Typen von Anomalien des Computernetzwerks basieren; eine Anzahl der Warnmeldungen aus der Mehrzahl der empfangenen Warnmeldungen mit einem vorgegebenen Ereignisschwellwert zu vergleichen 603, wobei die Anzahl der Warnmeldungen auf einem selben Typ einer Anomalie des Computernetzwerks basieren; und ein Alarmsignal auszugeben 605, falls die Anzahl der Warnmeldungen, die auf demselben Typ einer Anomalie des Computernetzwerks basieren, den Ereignisschwellwert unterschreitet. Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise einem Computernetzwerk wie in Fig. 4 oder Fig. 5 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Klassifikation von Warnmeldungen
- 102:: Warnmeldungen
- 110:: gesamte Menge der Warnmeldungen
- 111: Anomalie eines ersten Typs
- 112: Anomalie eines zweiten Typs
- 113: Anomalie eines dritten Typs
- 114: Anomalie eines vierten Typs
- 108:: Alarmsignal
- 200:: Analysesystem
- 201:: Empfangsmodul
- 203:: Vergleichsmodul
- 205:: Ausgabemodul
- 204:: Warnmeldungen
- 206:: Ergebnis des Vergleichs
- 300:: Analysesystem
- 301:: Empfangsmodul
- 307:: Klassifizierungsmodul
- 303:: Vergleichsmodul
- 305:: Ausgabemodul
- 304:: Warnmeldungen
- 310:: Typen von Anomalien
- 306:: Ergebnis des Vergleichs
- 108:: Alarmsignal bzw. Indikator für Angriff auf das Computernetzwerk
- 400:: Szenario eines Angriffs auf eine Internet-Webseite eines Computernetzwerks
- 410:: Computernetzwerk
- 411:: Internet-Webseite
- 420:: kleine Gruppe von Besuchern
- 500:: Szenario eines Virenangriffs auf eine Gruppe von vernetzten Computern eines unternehmensinternen Computernetzwerks
- 510:: unternehmensinternes Computernetzwerk
- 511, 513, 515:: Rechner in Computernetzwerk
- 512, 514, 516:: Prozesslisten auf den Rechnern
- P₁, P₂, P₃:: Prozesse, die auf den Rechnern ablaufen
- P_{Virus}:: Schadsoftware auf Rechner
- 600:: Verfahren zum Bestimmen eines Indikators für einen Angriff auf ein Computernetzwerk
- 601:: 1. Verfahrensschritt: Empfangen
- 603:: 2. Verfahrensschritt: Vergleichen
- 605:: 3. Verfahrensschritt: Ausgeben

## Patentansprüche

1. Verfahren (600) zum Erkennen eines Angriffs in einem Computernetzwerk (410, 510) mit einer Mehrzahl von Computern, **gekennzeichnet durch** die folgenden Schritte:
Empfangen (601) einer Mehrzahl von Warnmeldungen (102) von den Computern, wobei die Warnmeldungen auf verschiedenen Typen (111, 112, 113, 114) von Anomalien des Computernetzwerks basieren;
Vergleichen (603) einer Anzahl der Warnmeldungen aus der Mehrzahl der empfangenen Warnmeldungen (102) mit einem vorgegebenen Ereignisschwellwert, wobei die Anzahl der Warnmeldungen auf einem selben Typ (114) einer Anomalie des Computernetzwerks basieren; und
Ausgeben (605) eines Alarmsignals (108), falls die Anzahl der Warnmeldungen, die auf demselben Typ (114) einer Anomalie des Computernetzwerks basieren, den Ereignisschwellwert unterschreitet.

2. Verfahren (600) nach Anspruch 1, mit:
Empfangen der Mehrzahl von Warnmeldungen (102) in einem vorgegebenen Zeitintervall.

3. Verfahren (600) nach Anspruch 2, mit:
Klassifizieren der Mehrzahl von Warnmeldungen (102) bezüglich des Typs (111, 112, 113, 114) der von einer jeweiligen Warnmeldung angezeigten Anomalie.

4. Verfahren (600) nach Anspruch 3, mit:
Bestimmen des Typs (111, 112, 113, 114) der von einer Warnmeldung (102) angezeigten Anomalie basierend auf einem Inhalt der Warnmeldung (102).

5. Verfahren (600) nach Anspruch 3 oder 4, mit:
Zählen der empfangenen Warnmeldungen (102), die bezüglich desselben Typs (114) klassifiziert sind, in dem vorgegebenen Zeitintervall, um die Anzahl zu bestimmen; und
Ausgeben des Alarmsignals (108) falls die Anzahl der in dem vorgegebenen Zeitintervall gezählten Warnmeldungen (102), die bezüglich desselben Typs (114) klassifiziert sind, den Ereignisschwellwert unterschreitet.

6. Verfahren (600) nach einem der vorstehenden Ansprüche, mit:
Bestimmen eines Wahrscheinlichkeitswerts für das Vorliegen eines Angriffs auf das Computernetzwerk basierend auf den Warnmeldungen (102), deren Anzahl den Ereignisschwellwert unterschreitet.

7. Verfahren (600) nach Anspruch 6, umfassend:
Bestimmen des Wahrscheinlichkeitswerts für das Vorliegen eines Angriffs auf das Computernetzwerk ferner basierend auf zumindest einem der folgenden vorbestimmten Parameter:
Schwarze Listen,
Weiße Listen,
Schwellenwerte,
Ereigniszusammenhänge, und
Definition von Gefährdungspotenzialen einzelner Nutzergruppen des Computernetzwerks.

8. Verfahren (600) nach Anspruch 6 oder 7, umfassend:
Bestimmen des Wahrscheinlichkeitswerts für das Vorliegen eines Angriffs auf das Computernetzwerk ferner basierend auf einer Anzahl von Besuchern (420) des Computernetzwerks (410), insbesondere auf einer Anzahl von Besuchern (420) einer Webseite (411) des Computernetzwerks (410).

9. Verfahren (600) nach einem der Ansprüche 6 bis 8, umfassend:
Bestimmen des Wahrscheinlichkeitswerts für das Vorliegen eines Angriffs auf das Computernetzwerk ferner basierend auf einer Häufigkeit von selten ausgeführten Prozessen (P_{Virus}) in dem Computernetzwerk (510).

10. Verfahren (600) nach einem der Ansprüche 6 bis 9, umfassend:
Bestimmen des Wahrscheinlichkeitswerts für das Vorliegen eines Angriffs auf das Computernetzwerk ferner basierend auf einer Häufigkeit von Programmen (516), die auf einer vorgegebenen Gruppe aus der Mehrzahl von Computern (515) in dem Computernetzwerk (510) ausgeführt werden, insbesondere basierend auf einer Häufigkeit von Programmen (P_{Virus}), die erst ab einer vorgegebenen Zeit auf der vorgegebenen Gruppe von Computern (515) ausgeführt werden.

11. Verfahren (600) nach einem der vorstehenden Ansprüche, umfassend:
Nutzen eines oder mehrerer der folgenden Systeme auf zumindest einem der Mehrzahl von Computern zum Erzeugen der Warnmeldungen:
Virenscanner,
Proxyserver,
IDS, Angrifferkennungssystem,
Firewall,
Betriebssystem,
Log Management System,
SIEM System, Security Information and Event Management System.

12. Verfahren (600) nach einem der vorstehenden Ansprüche, umfassend:
Anpassen des Ereignisschwellwerts basierend auf den Warnmeldungen, deren Anzahl den Ereignisschwellwert unterschreitet.

13. Verfahren (600) nach einem der vorstehenden Ansprüche, mit adaptivem Anpassen des Ereignisschwellwerts in Abhängigkeit von zumindest einem der folgenden Ereignisse:
Anwender-Feedbacks,
Veränderungen in der Netzwerk-Architektur des Computernetzwerks,
Änderungen in der Anzahl der Computer des Computernetzwerks.

14. Analysesystem (200, 300) zum Erkennen eines Angriffs in einem Computernetzwerk (410, 510) mit einer Mehrzahl von Computern, **gekennzeichnet durch**:
ein Empfangsmodul (201, 301), das ausgelegt ist, eine Mehrzahl von Warnmeldungen (102) von den Computern zu empfangen, wobei die Warnmeldungen (102) auf verschiedenen Typen (111, 112, 113, 114) von Anomalien des Computernetzwerks basieren;
ein Vergleichsmodul (203, 305), das ausgelegt ist, eine Anzahl der Warnmeldungen aus der Mehrzahl der empfangenen Warnmeldungen mit einem vorgegebenen Ereignisschwellwert zu vergleichen wobei die Anzahl der Warnmeldungen auf einem selben Typ (114) einer Anomalie des Computernetzwerks basieren; und
ein Ausgabemodul (205, 307), das ausgelegt ist, ein Alarmsignal (108) auszugeben, falls die Anzahl der Warnmeldungen, die auf demselben Typ (114) einer Anomalie des Computernetzwerks basieren, den Ereignisschwellwert unterschreitet.

15. Analysesystem (300) nach Anspruch 14, mit
einem Klassifizierungsmodul (309), das ausgelegt ist, die Mehrzahl von Warnmeldungen (112) bezüglich des Typs der von einer jeweiligen Warnmeldung angezeigten Anomalie zu klassifizieren.

## Claims

1. A method (600) for detecting an attack in a computer network (410, 510) comprising a plurality of computers, **characterized by** the following steps:
receiving (601) a plurality of warning messages (102) from the computers, wherein the warning messages are based on different types (111, 112, 113, 114) of anomalies in the computer network;
comparing (603) a number of warning messages from the plurality of the received warning messages (102) to a predetermined event threshold, wherein the number of warning messages is based on a same type (114) of anomaly of the computer network; and
emitting (605) an alarm signal (108) if the number of warning messages based on the same type (114) of computer network anomaly falls below the event threshold.

2. The method (600) according to claim 1, comprising:
receiving the plurality of warning messages (102) within a predefined period of time.

3. The method (600) according to claim 2, comprising:
classifying the plurality of warning messages (102) with respect to the type (111, 112, 113, 114) of anomaly indicated by a respective warning message.

4. The method (600) according to claim 3, comprising:
determining the type (111, 112, 113, 114) of anomaly indicated by a warning message (102) based on a content of the warning message (102).

5. The method (600) according to claim 3 or 4, comprising:
counting the warning messages (102) classified as the same type (114) received within the predefined time period so as to determine the number; and
emitting the alarm signal (108) if the number of warning messages (102), which are classified as the same type (114), counted within the predefined time period falls below the event threshold.

6. The method (600) according to any one of the preceding claims, comprising:
determining a probability value for the presence of an attack on the computer network based on the number of warning messages (102) falling below the event threshold.

7. The method (600) according to claim 6, comprising:
determining the probability value for the presence of an attack on the computer network further based on at least one of the following predetermined parameters:
blacklists,
white lists,
thresholds,
event correlations, and
definition of threat potentials of individual user groups of the computer network.

8. The method (600) according to claim 6 or 7, comprising:
determining the probability value for the presence of an attack on the computer network further based on a number of visitors (420) to the computer network (410), particularly on a number of visitors (420) to a web page (411) of the computer network (410).

9. The method (600) according to any one of claims 6 to 8, comprising:
determining the probability value for the presence of an attack on the computer network further based on a frequency of rarely executed processes (P_{Virus}) in the computer network (510).

10. The method (600) according to any one of claims 6 to 9, comprising:
determining the probability value for the presence of an attack on the computer network further based on a frequency of programs (516) executed on a predefined group of computers from the plurality of computers (515) in the computer network (510), particularly based on a frequency of programs (P_{Virus}) only executed on the predefined group of computers (515) starting from a predefined time.

11. The method (600) according to any one of the preceding claims, comprising:
using one or more of the following systems on at least one of the plurality of computers to generate the warning messages:
virus scanner,
proxy server,
IDS (Intrusion Detection System),
firewall,
operating system,
log management system,
SIEM system (Security Information and Event Management system).

12. The method (600) according to any one of the preceding claims, comprising:
adapting the event threshold based on the number of warning messages falling below the event threshold.

13. The method (600) according to any one of the preceding claims, comprising adaptively adjusting the event threshold as a function of at least one of the following events:
user feedback,
changes in the network architecture of the computer network,
changes in the number of computers in the computer network.

14. An analysis system (200, 300) for detecting an attack in a computer network (410, 510) comprising a plurality of computers, **characterized by**:
a receiver module (201, 301) designed to receive a plurality of warning messages (102) from the computers, wherein the warning messages (102) are based on different types (111, 112, 113, 114) of anomalies in the computer network;
a comparison module (203, 305) designed to compare a number of warning messages from the plurality of the received warning messages to a predefined event threshold, wherein the number of warning messages are based on the same type (114) of anomaly in the computer network; and
an output module (205, 307) designed to emit an alarm signal (108) if the number of warning messages based on the same type (114) of anomaly in the computer network falls below the event threshold.

15. The analysis system (200, 300) according to claim 14, comprising:
a classification module (309) designed to classify the plurality of warning messages (112) relative to the type of anomaly indicated by a respective warning message.

## Revendications

1. Procédé (600) de détection d'une attaque dans un réseau d'ordinateurs (410, 510) comportant une pluralité d'ordinateurs, **caractérisé par** les étapes suivantes :
réception (601) d'une pluralité de messages d'alerte (102) des ordinateurs, les messages d'alerte reposant sur différents types (111, 112, 113, 114) d'anomalies du réseau d'ordinateurs,
comparaison (603) d'un nombre de messages d'alerte de la pluralité des messages d'alertes reçus (102) à une valeur seuil d'évènements prédéterminée, le nombre des messages d'alerte reposant sur un même type (114) d'une anomalie du réseau d'ordinateurs, et
sortie (605) d'un signal d'alarme (108) au cas où le nombre de messages d'alerte qui reposent sur le même type (114) d'une anomalie du réseau d'ordinateurs, tombe en dessous de la valeur seuil d'évènements.

2. Procédé (600) selon la revendication 1 avec :
réception de la pluralité de messages d'alerte (102) dans un intervalle de temps prédéterminé.

3. Procédé (600) selon la revendication 2 avec :
classification de la pluralité de messages d'alerte (102) par rapport au type (111, 112, 113, 114) de l'anomalie affichée par un message d'alerte respectif.

4. Procédé (600) selon la revendication 3 avec :
détermination du type (111, 112, 113, 114) de l'anomalie affichée par un message d'alerte (102) en se basant sur un contenu du message d'alerte (102).

5. Procédé (600) selon la revendication 3 ou 4 avec :
comptage des messages d'alerte (102) reçus, qui sont classés par rapport au même type (114), dans l'intervalle de temps prédéterminé pour déterminer le nombre, et
sortie du signal d'alarme (108) au cas où le nombre des messages d'alerte (102) comptés dans l'intervalle de temps prédéterminé, qui sont classés par rapport au même type (114), tombe en dessous de la valeur seuil d'évènements.

6. Procédé (600) selon l'une quelconque des revendications précédentes avec :
détermination d'une valeur de probabilité pour la présence d'une attaque sur le réseau d'ordinateurs en se basant sur les messages d'alerte (102), dont le nombre tombe en dessous de la valeur seuil d'évènements.

7. Procédé (600) selon la revendication 6, comprenant :
la détermination de la valeur de probabilité pour la présence d'une attaque sur le réseau d'ordinateurs en se basant en outre sur au moins un des paramètres prédéfinis suivants :
listes noires,
listes blanches,
valeurs seuils,
corrélations d'évènements et
définition des potentiels de mise en danger de groupes d'utilisateurs individuels du réseau d'ordinateurs.

8. Procédé (600) selon la revendication 6 ou 7, comprenant :
la détermination de la valeur de probabilité pour la présence d'une attaque sur le réseau d'ordinateurs en se basant en outre sur un nombre de visiteurs (420) du réseau d'ordinateurs (410), en particulier sur un nombre de visiteurs (420) d'une page Internet (411) du réseau d'ordinateurs (410).

9. Procédé (600) selon l'une quelconque des revendications 6 à 8, comprenant :
la détermination de la valeur de probabilité pour la présence d'une attaque sur le réseau d'ordinateurs en se basant en outre sur une fréquence de processus (Pᵥᵢᵣᵤₛ) rares exécutés dans le réseau d'ordinateurs (510).

10. Procédé (600) selon l'une quelconque des revendications 6 à 9, comprenant :
la détermination de la valeur de probabilité pour la présence d'une attaque sur le réseau d'ordinateurs en se basant en outre sur une fréquence de programmes (516), qui sont exécutés sur un groupe prédéterminé de la pluralité d'ordinateurs (515) dans le réseau d'ordinateurs (510), en se basant en particulier sur une fréquence de programmes (Pᵥᵢᵣᵤₛ), qui ne sont exécutés qu'à partir d'un temps prédéterminé sur le groupe prédéterminé d'ordinateurs (515).

11. Procédé (600) selon l'une quelconque des revendications précédentes, comprenant :
l'utilisation d'un ou de plusieurs des systèmes suivants sur au moins un de la pluralité d'ordinateurs pour générer des messages d'alerte:
analyseur de virus,
serveur mandate,
système de détection d'intrusion (SDI), système d'identification d'attaque,
pare-feu,
système d'exploitation,
système de gestion de journal (SGJ),
système de gestion de sécurité des informations et des événements (SGSIE).

12. Procédé (600) selon l'une quelconque des revendications précédentes, comprenant :
l'adaptation de la valeur seuil d'évènements en se basant sur les messages d'alerte, dont le nombre tombe en dessous de la valeur seuil d'évènements.

13. Procédé (600) selon l'une quelconque des revendications précédentes, avec harmonisation adaptative de la valeur seuil d'évènements en fonction d'au moins un des événements suivants :
réactions des usagers,
modifications dans l'architecture de réseau du réseau d'ordinateurs,
changements du nombre d'ordinateurs du réseau d'ordinateurs.

14. Système d'analyse (200, 300) pour identifier une attaque dans un réseau d'ordinateurs (410, 510) avec une pluralité d'ordinateurs, **caractérisé par** :
un module de réception (201, 301) qui est configuré pour recevoir une pluralité de messages d'alerte (102) des ordinateurs, les messages d'alerte (102) reposant sur différents types (111, 112, 113, 114) d'anomalies du réseau d'ordinateurs,
un module de comparaison (203, 305) qui est configuré pour comparer un nombre de messages d'alerte de la pluralité des messages d'alerte reçus à une valeur seuil d'évènements prédéterminée, le nombre des messages d'alerte reposant sur un même type (114) d'une anomalie du réseau d'ordinateurs, et
un module de sortie (205, 307), qui est configuré, pour émettre un signal d'alarme (108), au cas où le nombre de messages d'alerte qui est basé sur le même type (114) d'une anomalie du réseau d'ordinateurs, tombe en dessous de la valeur seuil d'évènements.

15. Système d'analyse (300) selon la revendication 14, avec :
un module de classification (309) qui est configuré pour classer la pluralité de messages d'alerte (112) par rapport au type de l'anomalie affichée par un message d'alerte respectif.
